Europäisches Patentamt

European Patent Office

Office européen des brevets

(19)

(11) Publication number: **0 116 471**
**B1**

(12) **EUROPEAN PATENT SPECIFICATION**

(45) Date of publication of patent specification: **11.11.87**

(51) Int. Cl.⁴: **G 11 B 23/00, G 11 B 17/02**

(21) Application number: **84300851.7**

(22) Date of filing: **10.02.84**

(54) Flexible magnetic discs.

(30) Priority: **10.02.83 JP 18575/83**
**04.03.83 JP 31442/83**

(43) Date of publication of application:
**22.08.84 Bulletin 84/34**

(45) Publication of the grant of the patent:
**11.11.87 Bulletin 87/46**

(84) Designated Contracting States:
**AT DE FR GB NL**

(56) References cited:
**EP-A-0 076 064**
**FR-A-2 488 714**
**FR-A-2 507 371**

**IBM TECHNICAL DISCLOSURE BULLETIN;
vol.13, no.5, October 1970, page 1242, New
York (USA); A.KLUTH: "Disk pack locating
device"**

**ELECTRONIC DESIGN, vol.30, no.23, November
1982, pages 45, 46, Waseca, MN, Denville, NJ
(USA); CARL WARREN: "Sub-4-in. floppy
drives gain industry momentum"**

(73) Proprietor: **SONY CORPORATION**
**7-35 Kitashinagawa 6-Chome Shinagawa-ku
Tokyo 141 (JP)**

(72) Inventor: **Saito, Etsuro c/o Sony Corporation
Patents Division 7-35, Kitashinagawa 6-chome
Shinagawa-ku Tokyo (JP)**

(74) Representative: **Purvis, William Michael
Cameron et al
D. Young & Co. 10 Staple Inn
London WC1V 7RD (GB)**

(56) References cited:
**IEEE TRANSACTIONS ON MAGNETICS, vol.
MAG-17, no.6, November 1981, pages 2742-
2744, New York (US); Y. KATOH et al.:
"Development of a new compact floppy disk
drive system"**

Courier Press, Leamington Spa, England.

## Description

The invention relates to flexible magnetic discs and particularly to the centre cores thereof.

In a previous proposal (IBM Technical Disclosure Bulletin Vol 13 No 5) a disc arrangement is provided with a central core in which a locating ring has an aperture for receiving a drive spindle. The aperture is provided with location points for receiving the spindle and disposed in opposition to these location points is a round section spring rod which runs tangentially to a drive spindle receivable in the spindle aperture and which is supported at each end in a groove in the locating ring. The round section spring rod is free to rotate in its groove and, due to its section, can make only point contact with the drive spindle.

In another previous proposal FR—A—2507371, a disc core is moulded in resin material. The disc core has a spindle receiving aperture therein and wall portions defining the aperture bear against a disc drive spindle. The spindle is urged into contact with the said wall portions by a springy portion or portions integrally moulded with the disc core. The springy portion or portions may be either of wishbone kind, connected at both ends with the remainder of the disc-core, or of a leaf kind with only one end connected to the remainder of the disc core.

The invention has among its objects to provide a structure of a centre core of a magnetic disc which allows extremely precise disc centring.

According to the invention, there is provided a flexible magnetic disc comprising;

a flexible magnetic sheet and a centre core secured to the flexible magnetic sheet and having a spindle aperture therein to receive a spindle of a disc drive, a pair of centering surfaces disposed in the spindle aperture and a resilient biasing member for biasing the disc drive spindle against the pair of centering surfaces,

characterised in that the centre core comprises:—

a ring shaped metal plate to which the flexible magnetic sheet is secured;

a guide of resin material mounted on the ring shaped metal plate and having therein a pair of slits;

a metal spring plate comprising the resilient biasing member and having projections at the ends thereof engaged in the pair of slits, the metal spring plate having a contact face to engage the disc drive spindle introduced into the spindle aperture to urge the spindle into engagement with the centering surfaces; and

a ring shaped cover of resin material which covers the pair of slits and prevents accidental drop-out of the projections of the metal spring plate from the pair of slits in the guide.

The invention is diagrammatically illustrated by way of example with reference to the accompanying drawings, in which:—

Figures 1A and 1B are plan views showing the front and rear surfaces, respectively, of a magnetic disc cassette of conventional kind;

Figure 2 is a plan view of a metal sheet of a centre core of a flexible magnetic disc according to the invention;

Figure 3 is a sectional view taken on line A—A in Figure 2;

Figure 4 is a plan view showing a ring member moulded over the metal sheet of Figures 2 and 3;

Figure 5 is a sectional view taken on line B—B in Figure 4;

Figure 6 is a partial sectional view taken on line C—C in Figure 4;

Figure 7 is a plan view of a spring plate of a core member of a flexible magnetic disc according to the invention;

Figure 8 is a perspective view of a cap member to be mounted on the ring member of Figure 4;

Figure 9 is a longitudinal sectional view of the ring member of Figure 8;

Figure 10 is a sectional view through the middle part of a flexible magnetic disc according to the invention;

Figure 11 is another sectional view taken along the spring plate; and

Figure 12 is a plan view showing a spindle inserted into a centre core of a flexible magnetic disc according to the invention.

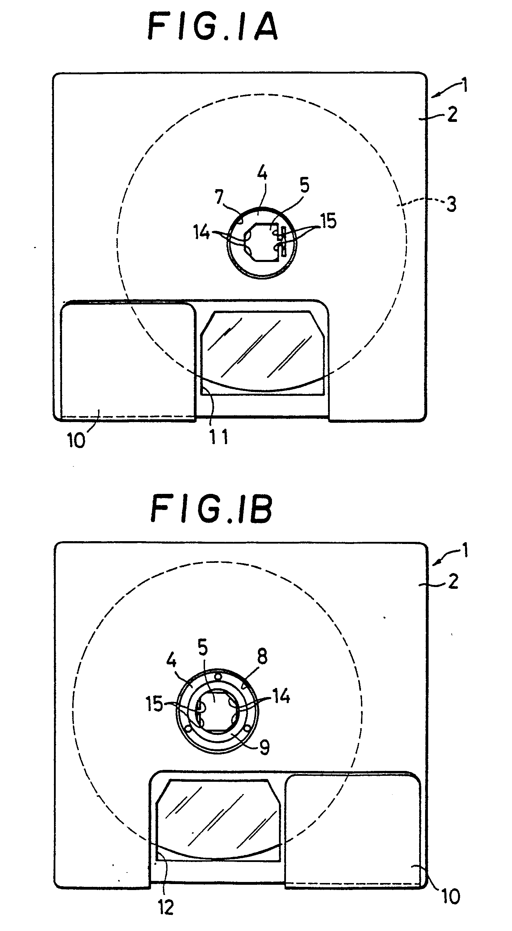

As shown in Figures 1A and 1B, a conventional disc cassette 1 has a flat case 2 in which a magnetic disc 3 of conventional kind is received in a manner so as to be rotatable. Such a magnetic disc cassette 1 can be used as a recording medium for a microcomputer or an electronic still camera incorporating a charge coupled device. The magnetic disc 3 has a centre core 4 for mounting on a disc drive unit. When the disc cassette 1 is mounted on such a disc drive unit, the centre core 4 is magnetically coupled to a drive shaft of the disc drive unit through central holes 7 and 8 provided in the front and rear surfaces, respectively, of the case 2. A permalloy ring 9 to be magnetically attracted to a magnet of the disc drive unit is attached to the rear surface of the centre core 4. A spindle hole 5 for receiving the drive spindle of the disc drive unit is provided at the centre of the centre core 4.

A press pad insertion opening 11 and a head insertion opening 12 are formed on the front and rear surfaces, respectively of the case 2. A slidable shutter 10 is mounted on the case 2 and can close these openings 11 and 12 when the cassette is not being used.

The centre core 4 is formed of a resin, and the spindle hole 5 is defined by V-shaped tapered projections 14 and thin plate-like spring tabs 15. The spindle received in the spindle hole 5 is urged against the tapered projections 14 by means of the spring tabs 15, thereby effecting centering of the disc.

Since the centre core is moulded, the sizes of the tapered projections 14 and spring tabs 15 vary from one to another and over time. This results in a centring error and consequent eccentric rotation of the disc. Since the spring tabs 15 are of resin, it is difficult to obtain and maintain a suitable spring force due to the variations in size of these parts upon moulding and over time.

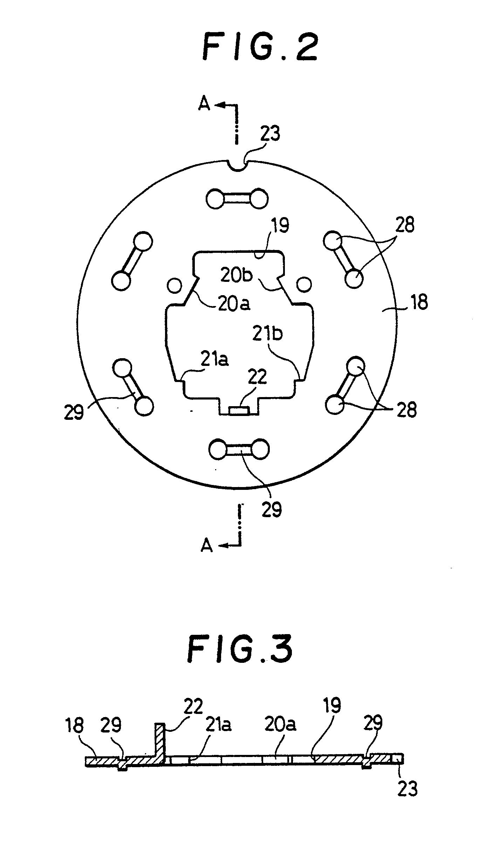

Figures 2 and 3 shows that a core member 18 of a flexible magnetic disc according to the invention can be obtained by punching a ring-like shape out of soft iron plate or like material. A pair of tapered projections 20a and 20b and a pair of spring supports 21a and 21b are formed at the inner periphery of a central hole 19 of the core member 18. The end faces of a spring supports 21a and 21b are formed at the inner periphery of a central hole 19 of the core member 18. The end faces of the spring supports 21a and 21b are perpendicular to the line A—A. The core member 18 also acts as a yoke material which is magnetically attracted to a chucking magnet of the disc drive unit. Accordingly, the permalloy ring 9 shown in Figure 1B can be omitted.

As shown in Figure 2, the core member 18 has a symmetrical shape, and a bent portion 22 is formed on the centre line A—A' at a portion along the inner periphery of the core 18 defining the central hole 19. The bent portion 22 opposes a rotation detector of the disc drive unit. When the leakage flux of the chucking magnet is detected by the rotation detector, the rotation detector generates a pulse which represents the rotation phase of the disc. Since the bent portion 22 is formed aligned on the line A—A, dynamic balance of the core member 18 during rotation thereof is easy to attain. When a notch 23, for example, is formed at a portion of the outer periphery of the core member 18 which is on the line A—A, a good dynamic balance is achieved.

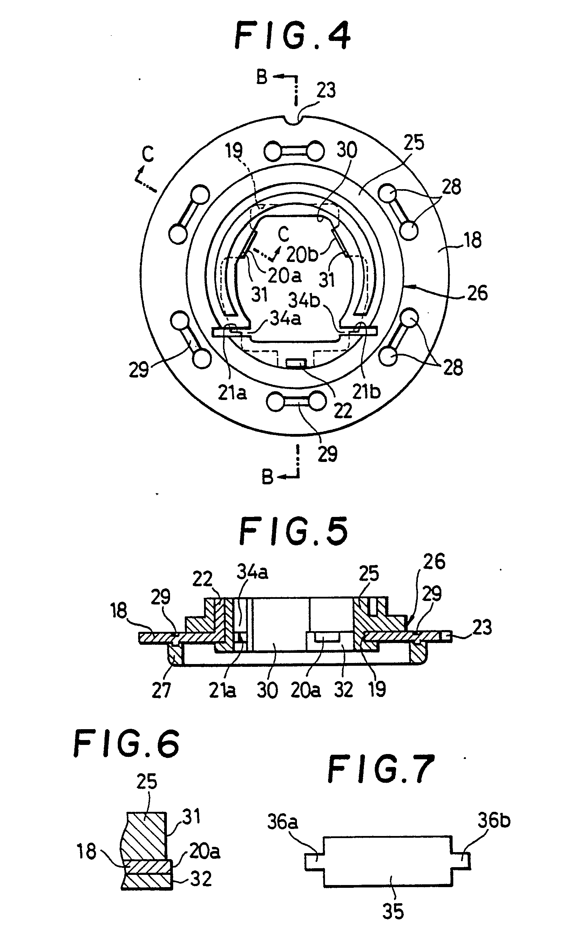

Figures 4 and 5 show a moulded ring member 25 in which the core member 8 is embedded. The diameter of an outer circumferential surface 26 of the ring member 25 coincides with the inner diameter of a central hole in the magnetic disc. Thus, the magnetic disc is positioned by the outer circumferential surface 26 and is secured to the core member 18. Simultaneously with formation of the ring member 25 by moulding, an annular rib 27 for welding the disc thereto is formed on the lower surface at the outer periphery of the core member 18. Since the rib 27 is formed by moulding of a resin on the back of the core member 18, a plurality of holes 28 and a plurality of grooves 29 are formed at the outer periphery of the core member 18.

A central hole 30 of the ring member 25 is smaller than the central hole 19 of the core member 18, as shown in Figure 4. However, as shown in Figure 6 which is a partial section along the line C—C in Figure 4, the tapered projections 20a and 20b of the core member 18 alone project inward from an upper inner circumferential surface 31 of the ring member 25 defining the central hole 30. Thus, the outer surface of the spindle engages the tapered projections 20a and 20b. A lower circumferential surface 32 of the ring member 25 defining the central hole 30 which is lower than the core member 18 is even with the tapered projections 20a and 20b, as shown in Figure 6. With this construction, the spindle may not directly abut against the edge of the tapered projection 20a, thereby facilitating insertion of the spindle and preventing abrasion of the spindle and a resultant decrease in the centring precision.

Slits 34a and 34b are formed at the portions of the ring member 25 which overlie the spring support 21a and 21b of the core member 18. A spring plate 35 as shown in Figure 7 is inserted in the slits 34a and 34b. The spring supports 21a and 21b of the core member are located at the positions substantially midway along the widthwise direction of the slits 34a and 34b, respectively. When the spring plate 35 is inserted, the spring plate 35 is radially supported by the spring supports 21a and 21b. Projections 36a and 36b are formed at the two ends of the spring plate 35. The projections 36a and 36b are supported by the core member 18 in the slits 34a and 34b so that the spring plate 35 is axially supported.

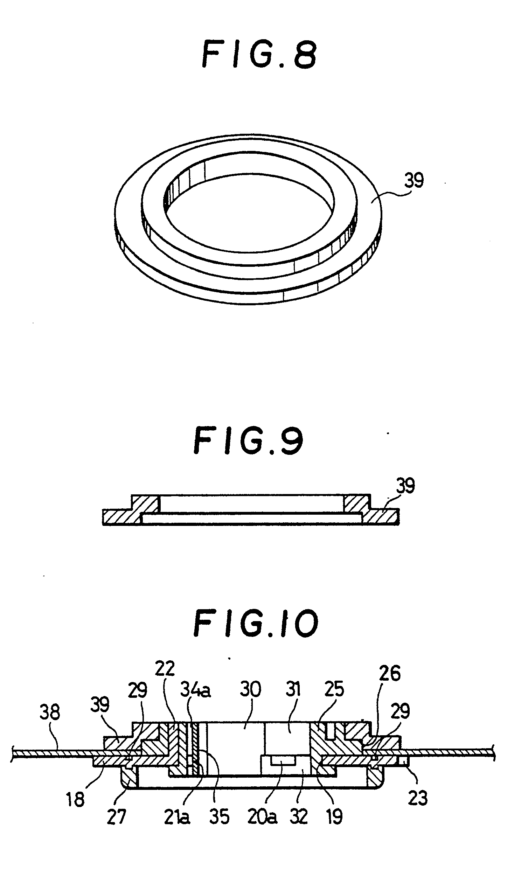

A magnetic disc having a centre core can be formed in the following manner. First, the spring plate 35 is inserted in the slits 34a and 34b. A magnetic disc 38 is placed on the upper surface of the core member 18 and is located by the outer circumferential surface 26 of the ring member 25, as shown in the sectional view of Figure 10. A cap member 39 shown in Figures 8 and 9 is fitted onto the disc 38 and the cap member 39 and the ring member 25 are welded together by high-frequency welding.

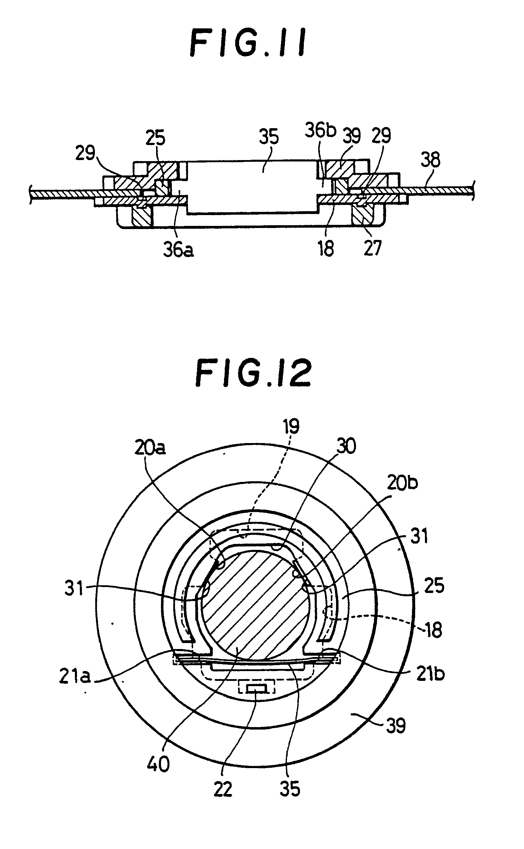

In this state, as shown in Figure 11 (section along the spring plate 35), since the slits 34a and 34b in which the projections 36a and 36b at the two ends of the spring plate 35 are inserted are covered with the cap member 39, the spring plate 35 cannot inadvertently drop out.

Figure 12 shows a spindle 40 of a disc drive unit inserted into the hole in the centre core. As shown in Figure 12, the spindle 40 is urged against the tapered projections 20a and 20b of the core member 18 by means of the spring plate 35, so that the disc is accurately centred. Accordingly, high-precision centring of the disc can be performed in accordance with a high size precision of the core member 18 which is obtained by punching of a metal sheet. Since the positional relationship of the tapered projections 20a and 20b and the spring plate 35 is regulated by the spring supports 21a and 21b of the core member 18, a constant spring force is obtained which is free from variations from one disc to another and variations over time. Stable centring of the disc can therefore be affected.

**Claims**

1. A flexible magnetic disc comprising;
a flexible magnetic sheet (38), a centre core secured to the flexible magnetic sheet (38) and having a spindle aperture (5) therein to receive a spindle (40) of a disc drive, a pair of centring surfaces (20a, 20b) disposed in the spindle aperture (5) and a resilient biasing member (35) for biasing the disc drive spindle (40) against the pair of centring surfaces (20a, 20b), characterised in that the centre core (18, 25, 39) comprises:—

a ring shaped metal plate (18) to which the flexible magnetic sheet (38) is secured;

a guide (25) of resin material mounted on the ring shaped metal plate (18) and having therein a pair of slits (34a, 34b);

a metal spring plate (35) comprising the resilient biasing member and having projections (36a, 36) at the ends thereof engaged in the pair of slits (34a, 34b), the metal spring plate (35) having a contact face to engage the disc drive spindle (40) introduced into the spindle aperture (5) to urge the spindle (4) into engagement with the centring surfaces (20a, 20b); and

a ring shaped cover (39) of resin which covers the pair of slits (34a, 34b) and prevents accidental drop-out of the projections (36a, 36b) of the metal spring plate (35) from the pair of slits (34a, 34b) in the guide (25).

2. A flexible magnetic disc according to claim 1, in which the ring shaped metal plate (18) has a pair of spring supports (21a, 21b) to support the projections (36a, 36b) of the metal spring plate (35) within the pair of slits (34a, 34b).

3. A flexible magnetic disc according to claim 1 or claim 2, in which the centring surfaces comprise a pair of projections (20a, 20b) on the ring shaped metal plate (18) and disposed in said spindle aperture (5).

**Patentansprüche**

1. Flexible Magnetplatte mit
einer flexiblen Magnetscheibe (38), einem Mittelkern, der an der flexiblen Magnetscheibe (38) befestigt ist und darin eine Wellenöffnung (5) aufweist, um eine Welle (40) eines Plattenantriebs aufzunehmen, einem Paar von Zentrierflächen (20a, 20b), die in der Wellenöffnung (5) angeordnet sind, und einem elastischen Vorspannelement (35) zum Vorspannen der Welle (40) des Plattenantriebs gegen das Paar von Zentrierflächen (20a, 20b), dadurch gekennzeichnet, daß der Mittelkern (18, 25, 39) aufweist:

eine ringförmige Metallplatte (18), an der die flexible Magnetscheibe (38) befestigt ist,

eine Führung (25) aus Kunststoff, die auf der ringförmigen Metallplatte (18) montiert ist und in sich ein Paar von Schlitzen (34a, 34b) aufweist,

eine Metallfederplatte (35), die das elastische Vorspannelement aufweist und Vorsprünge (36a, 36b) an deren Enden besitzt, die mit dem Paar von Schlitzen (34a, 34b) in Eingriff stehen, wobei die Metallfederplatte (35) eine Berührungsfläche hat, die mit der Welle (40) des Plattenantriebs, welche in die Wellenöffung eingeführt ist, in Eingriff steht, um die Welle (40) in Eingriff mit den zentrierflächen (20a, 20b) zu drücken, und

eine ringförmige Abdeckung (39) aus Kunststoff, die das Paar von Schlitzen (34a, 34b) abdeckt und ein zufälliges Heraustreten der Vorsprünge (36a, 36b) der Metallfederplatte (35) aus dem Paar von Schlitzen (34a, 34b) in der Führung (25) verhindert.

2. Flexible Magnetplatte nach Anspruch 1, bei der die ringförmige Metallplatte (18) ein paar von Federhalterungen (21a, 21b) aufweist, um die Vorsprünge (36a, 36b) der Metallfederplatte (35) innerhalb des Paares von Schlitzen (34a, 34b) zu halten.

3. Flexible Magnetplatte nach Anspruch 1 oder 2, bei der die Zentrierflächen ein Paar von Vorsprüngen (20a, 20b) an der ringförmigen Metallplatte (18) aufweist und in der Wellenöffnung (5) angeordnet sind.

**Revendications**

1. Disque magnétique flexible comportant;
une plaque magnétique flexible (38), un noyau central fixé à la plaque magnétique flexible (38) et présentant une ouverture pour broche (5) pour recevoir une broche (40) d'une unité d'entraînement du disque, une paire de surfaces de centrage (20a, 20b) disposées dan l'ouverture pour broche (5) un et élément élastique contraignant (35) pour contraindre la broche (40) de l'unité de l'entraînement du disque contre la paire de surfaces de centrage (20a, 20b).

caractérisé en ce que le noyau central (18, 25, 39) comporte:

un plateau métallique de forme annulaire (18) auquel est fixée la plaque métallique flexible (38);

un guide (25) en matériau à base de résine monté sur le plateau métallique de forme annulaire (18) et présentant une paire de fentes (34a, 34b);

une plaquette métallique (35) constituant l'élément élastique contraignant et présentant des saillies (36a, 36b) dont les extrémités viennent se loger dans la paire de fentes (34a, 34b), la plaquette métallique élastique (35) présentant une face de contact pour venir au contact de la broche (40) d'entraînement du disque introduite dans l'ouverture (5) pour broche pour pousser la broche (40) au contact des surfaces de centrage (20a, 20b), et

un couvercle de forme annulaire (22) en matériau à base de résine qui recouvre la paire de fentes (34a, 34b) et interdit aux saillies (36a, 36b) de la plaquette métallique élastique (35) de sortir accidentellement de la paire de fentes (34a, 34b) prévues dans le guide (25).

2. Disque magnétique flexible selon la revendication 1, dans lequel le plateau métallique de forme annulaire (18) présente une paire de supports élastiques (21a, 21b) pour supporter les saillies (36a, 36b) de la plaquette métallique (5) dans la paire de fentes (34a, 34b).

3. Disque magnétique flexible selon la revendication 1 et la revendication 2, dans lequel les surfaces de centrage comportent une paire de saillies (20a, 20b) qui sont sur le plateau métallique de forme annulaire (18) et sont disposées dans ladite ouverture pour broche (5).

# FIG. IA

# FIG. IB

# FIG.2

A

23

19

20b

28

20a

18

21b

21a

29

22

28

29

A

# FIG.3

18  29    22  21a    20a    19    29

23

0 116 471

# FIG.4

# FIG.5

# FIG.6

# FIG.7

3

# FIG.8

39

# FIG.9

39

# FIG.10

# FIG.11

# FIG.12